# FASCICULE DE BREVET EUROPEEN

(11) **EP 4 457 499 B1**
(45) Date de publication et mention de la délivrance du brevet: **22.04.2026**
(21) Numéro de dépôt: 22847618.0
(22) Date de dépôt: 28.12.2022
(51) Int. Cl.: G01N 21/03, G01N 21/76

(54) **CARTE D'ANALYSE D'UN ECHANTILLON BIOLOGIQUE, PROCEDE DE FABRICATION ET DE CONTROLE QUALITE**
VORRICHTUNG ZUR ANALYSE EINER BIOLOGISCHEN PROBE, HERSTELLUNGSVERFAHREN UND QUALITÄTSKONTROLLE
ANALYSIS CHIP FOR A BIOLOGICAL SAMPLE, MANUFACTURING PROCESS AND QUALITY CONTROL

(30) Priorité: 31.12.2021 FR 2114728
(43) Date de publication de la demande: 06.11.2024
(73) Titulaire: BIOMERIEUX, 69280 Marcy-L'Etoile (FR)
(72) Inventeur: BROYER, Patrick, 38500 SAINT-CASSIEN (FR); BLAZE, Jérôme, 38000 GRENOBLE (FR); PINSTON, Frédéric, 38000 GRENOBLE (FR); GOUJARD, Matthieu, 38000 GRENOBLE (FR)
(74) Mandataire: bioMérieux PI Groupement mandataires
(86) Numéro de dépôt international: PCT/FR2022/052515
(87) Numéro de publication internationale: WO 2023/126617

(56) Documents cités:
- EP-B1- 1 963 853
- WO-A1-2019/116209
- DE-U1- 9 104 596
- US-A- 4 756 884
- US-A1- 2010 209 927
- US-A1- 2016 195 524
- US-A1- 2020 011 884
- US-A1- 2020 061 637

## Description

### Domaine technique

La présente invention se rapporte au domaine de l'analyse d'échantillons biologiques, et plus précisément concerne une carte d'analyse pour l'analyse d'un échantillon biologique, en particulier pour la détection d'endotoxines, au moyen d'un instrument de diagnostic in vitro et les procédés de fabrication de la carte d'analyse et de contrôle qualité d'une plaque d'une carte d'analyse.

### Arrière-plan technologique

L'analyse d'échantillon biologique, comme par exemple les tests de détection d'endotoxines, repose sur une ou plusieurs réactions entre l'échantillon biologique et un ou une pluralité de réactifs. Il existe des systèmes et procédés microfluidiques qui permettent de réaliser ces analyses d'échantillon biologique. Les réactifs sont déposés dans des puits et l'échantillon biologique est par exemple introduit via un canal d'amenée. Cela nécessite la préparation de multiples dilutions standards et contrôles internes. Dans le cadre de la détection d'endotoxines, par exemple, les tests sont exigeants et requièrent beaucoup d'étapes de manipulation par l'opérateur. Ces étapes manuelles de préparation sont longues et peuvent entraîner des résultats variables voire invalides. En outre, il n'existe pas de solution pour contrôler la préparation des tests et ainsi déterminer rapidement si une erreur a été commise. Ainsi, un éventuel problème ne pourra être détecté qu'à la fin d'une durée de mesure, préalablement choisie afin d'être suffisamment longue pour permettre l'achèvement complet des diverses réactions susceptibles de se produire avec différentes dynamiques, lorsqu'il sera tenté d'exploiter des résultats erronés.

Il existe des microplaques tel que le système « GOPLATE^{™} » comprenant 96 puits préremplis avec des quantités standards requises de réactifs et ayant été soumis à des contrôles de concentrations. Ce dispositif permet de réduire de plus de 50 % le temps de manipulation par rapport aux tests traditionnels d'endotoxines sur microplaques. Néanmoins, la mise en œuvre d'analyse d'échantillon biologique via ce dispositif nécessite de nombreux accessoires annexes et impose encore de multiples étapes manuelles. Il existe également des microplaques intégrées à des systèmes consommables tel que le « FilmArray^{®} » qui exigent peu d'opérations manuelles. Ces microplaques préremplies permettent aussi de limiter l'intervention humaine dans le processus d'analyse d'échantillon biologique et donc de réduire les risques d'erreurs humaines. WO2019/116209 A1 divulgue une puce microfluidique qui comprend un corps principal de puce, qui a un centre de rotation, un réservoir d'échantillon, une rainure de liquide, de multiples chambres de réaction, un premier canal d'entrée et de multiples seconds canaux d'entrée, et une membrane de scellage reliée au corps principal de puce. Les réactifs sont respectivement fixés aux parois de la chambre de réaction, telles que les parois inférieures ou latérales. US2016195524 A1 divulgue une cassette comprenant un conduit de fluide et une ou plusieurs chambres contenant des réactifs dans le conduit de fluide, une mesure d'un échantillon pouvant être obtenue à partir de ces chambres à l'aide d'un lecteur de cassette. US2010209927 A1 divulgue un dispositif de traitement microfluidique comprenant un comprimé contenant un réactif.

Cependant, les microplaques préremplies de l'art antérieur ne sont pas adaptées à certaines réactions nécessitant l'usage de différents réactifs qui ne doivent pas réagir entre eux et donc se mélanger avant l'introduction d'un échantillon biologique dans les puits de la microplaque. En outre, dans l'état de la technique antérieur, un réactif est déposé le plus souvent au fond des puits des microplaques. Cela impose une multiplicité d'étapes comprenant, entre autres, la dépose de réactifs sur un film collé à l'une des faces de la microplaque faisant office de fond pour les puits, l'application de films adhésifs double-face sur chacune des faces de la microplaque puis l'insertion de la plaque entre deux films d'une poche d'analyse. Ces différentes couches de films plastiques contribuent à augmenter le coût du consommable, et complexifient la fabrication de celui-ci.

Ainsi, il n'existe pas de solution permettant de déposer des gouttes (< 1µL) adjacentes et sans contact entre les gouttes durant le séchage dans une microplaque miniature qui ne comportent pas préalablement de support de dépose perpendiculaire à l'axe de dépose de réactif.

### Présentation de l'invention

L'invention vise donc à permettre d'analyser un échantillon biologique, en particulier pour la détection d'endotoxines, de façon plus fiable, rapide et moins onéreuse.

A cet effet, l'invention propose une carte d'analyse pour l'analyse d'un échantillon biologique au moyen d'un instrument de diagnostic in vitro selon la revendication 1. La carte d'analyse comprend une pluralité de puits formés dans une plaque, des puits contenant au moins un réactif, la carte d'analyse comprenant un canal d'amenée d'un échantillon liquide au puits, caractérisée en ce que chaque puits forme dans ladite plaque un espace interne défini par une surface latérale, ladite surface latérale comprenant au moins une paroi, et en ce que le réactif d'un puits est déposé et séché uniquement sur la surface latérale dudit puits.

L'invention est avantageusement complétée par les différentes caractéristiques suivantes prises seules ou selon leurs différentes combinaisons possibles :
Chaque puits traverse la plaque d'une face à une autre face de ladite plaque.

Chaque puits présente plusieurs réactifs différents déposés uniquement sur sa surface latérale, lesdits réactifs différents comprenant un premier réactif et un deuxième réactif.

Le premier réactif est susceptible d'être activé par le deuxième réactif puis de réagir avec l'échantillon liquide.

Chaque puits comprend une pluralité de lobes et une pluralité de jonctions connectant les lobes.

Chaque puits présente plusieurs réactifs différents déposés uniquement sur sa surface latérale, lesdits réactifs différents comprenant un premier réactif et un deuxième réactif, et dans laquelle un puits contient au moins le premier réactif déposé sur une paroi d'un premier lobe dudit puits et le deuxième réactif déposé sur une paroi d'un deuxième lobe dudit puits.

Les lobes d'un puits ont une forme elliptique et les jonctions d'un puits sont rectilignes selon une direction de jonction.

Une jonction connecte seulement deux lobes d'un puits et l'ensemble des lobes et des jonctions d'un puits forme une chaîne ouverte.

La carte d'analyse est associée à une orientation d'analyse imposée à la carte d'analyse lors de l'analyse de l'échantillon biologique au moyen de l'instrument de diagnostic in vitro, cette orientation d'analyse étant caractérisée en ce que les faces de la plaque s'étendent dans la direction déterminée, préférentiellement une direction verticale, et dans laquelle un premier lobe d'un puits est connecté à un deuxième lobe dudit puits par une jonction selon une direction de jonction et l'angle entre la direction déterminée et ladite direction de jonction est de préférence supérieur à 10°.

Le diamètre des lobes des puits est supérieur à 0,1 mm, la largeur des jonctions est inférieure à 1 mm et la longueur des jonctions est supérieure à 0,05 mm.

Chaque face de la plaque est recouverte d'un film transparent au moins sur une face destinée à permettre l'analyse de la carte d'analyse.

Les réactifs d'analyse sont aptes à causer une réaction de luminescence en présence d'endotoxines.

L'invention concerne également un procédé de fabrication d'une carte d'analyse selon la revendication 10 comprenant les étapes suivantes :
a) fourniture d'une plaque pourvue d'une pluralité de puits,
b) disposition de la plaque dans une orientation d'analyse dans laquelle les faces de la plaque s'étendent dans la direction déterminée,
c) dépose d'au moins une goutte de liquide de réactif en contact avec surface latérale une paroi de la surface latérale du puits,
d) séchage de la au moins une goutte de de réactif et obtention de réactif déposé sur la paroi de la surface latérale du puits.

Ce procédé de fabrication est avantageusement complété par les différentes caractéristiques suivantes prises seules ou selon leurs différentes combinaisons possibles : Le procédé de fabrication comprend une étape e) d'insertion de la plaque entre deux films, et adhésion des films sur la plaque.

L'étape c) de dépose de la goutte de réactif comprend des étapes de :
c1) mise en place d'une aiguille avec une extrémité de l'aiguille dans l'espace interne d'un puits,
c2) formation d'une goutte à l'extrémité de l'aiguille, jusqu'à contact avec une paroi de la surface latérale,
c3) retrait de l'aiguille.

L'invention concerne également un procédé de contrôle qualité d'une plaque pourvue d'une pluralité de puits selon la revendication 13, chaque puits formant dans ladite plaque un espace interne défini par une surface latérale, des puits présentant une pluralité de dépôts de réactifs liquides déposés séparément sur sa surface latérale, comprenant des étapes de :
Q1) acquisition d'une image de ladite plaque,
Q2) vérification d'absence de liquide entre des dépôts de réactif liquide.

Ce procédé de contrôle qualité est avantageusement complété par les différentes caractéristiques suivantes prises seules ou selon leurs différentes combinaisons possibles :
Le procédé de contrôle qualité comprend une étape Q0) d'acquisition d'une image de ladite plaque vide, et l'étape Q2) comprend la comparaison de pixels de l'image acquise à l'étape Q1) et de pixels de l'image acquise à l'étape Q0).

L'image de la plaque est une image ombroscopique.

Le procédé de contrôle qualité comprend une étape a1) de reconnaissance par un algorithme de détection des puits de la plaque et identification de régions d'intérêt pour chaque puits de la plaque pour lesquelles est vérifiée l'absence de liquide.

Chaque puits comprend une pluralité de lobes et une pluralité de jonctions connectant les lobes, les lobes étant destinés à recevoir les dépôts de réactifs liquides, et les régions d'intérêt comprennent les jonctions, l'absence de liquide dans lesdites jonctions étant vérifiée.

### Présentation des figures

D'autres caractéristiques, buts et avantages de l'invention ressortiront de la description qui suit, qui est purement illustrative et non limitative, et qui doit être lue en regard des dessins annexés sur lesquels :
Figure 1 : la Figure 1 montre un exemple de carte d'analyse ne tombant pas dans la portée des revendications;
Figure 2 : la Figure 2 illustre schématiquement un puits de la carte d'analyse selon un exemple ne tombant pas dans la portée des revendications;
Figure 3: la Figure 3 illustre schématiquement un puits de la carte d'analyse comportant trois lobes selon un mode de réalisation possible de l'invention ;
Figure 4 : la Figure 4 montre schématiquement une carte d'analyse disposée dans une orientation d'analyse, la carte d'analyse comportant des puits de trois lobes selon un mode de réalisation possible de l'invention ;
Figure 5 : la Figure 5 est un diagramme montrant des étapes du procédé de fabrication de la carte d'analyse selon un mode de réalisation possible de l'invention ;
Figure 6 : la Figure 6a illustre deux aiguilles positionnées jusque dans l'espace interne d'un puits ;
Figure 6b : la Figure 6b illustre la formation de deux gouttes de réactifs à l'extrémité des aiguilles ;
Figure 6c : la Figure 6c illustre le dépôt de deux gouttes de réactif sur la surface latérale des lobes du même puits réactionnel ;
Figure 6d : la Figure 6d illustre deux aiguilles retirées hors de l'espace interne d'un puits après dépôt de deux gouttes de réactif sur la surface latérale des lobes du même puits réactionnel ;
Figure 7 : la Figure 7 est un diagramme montrant des étapes du procédé de contrôle qualité d'une plaque pourvue d'une pluralité de puits selon un mode de réalisation possible de l'invention,
Figure 8 : la Figure 8 est un schéma du système de contrôle,
Figure 9 : la Figure 9 est une représentation de la plaque de la carte d'analyse, après dépôt de gouttes de réactif,
Figure 10 : la Figure 10 est une image acquise à l'étape Q0 du procédé de contrôle selon l'invention,
Figure 11 : la Figure 11 est une image acquise à l'étape Q1 du procédé de contrôle selon l'invention,
Figure 12a : la Figure 12a est une image représentant l'Identification algorithmique de régions d'intérêt des lobes pour chaque puit, où sera vérifié la présence de liquide,
Figure 12b : la Figure 12b est une image représentant l'Identification algorithmique de régions d'intérêt des jonctions pour chaque puit, où sera vérifié la présence de liquide dans ces jonctions,
Figure 13 : la Figure 13 représente l'extraction des régions d'intérêt des lobes et la vérification algorithmique de la présence de liquide,
Figure 14 : la Figure 14 représente l'extraction des régions d'intérêt des jonctions et la vérification algorithmique de la présence de liquide.

### Description détaillée

### Carte d'analyse

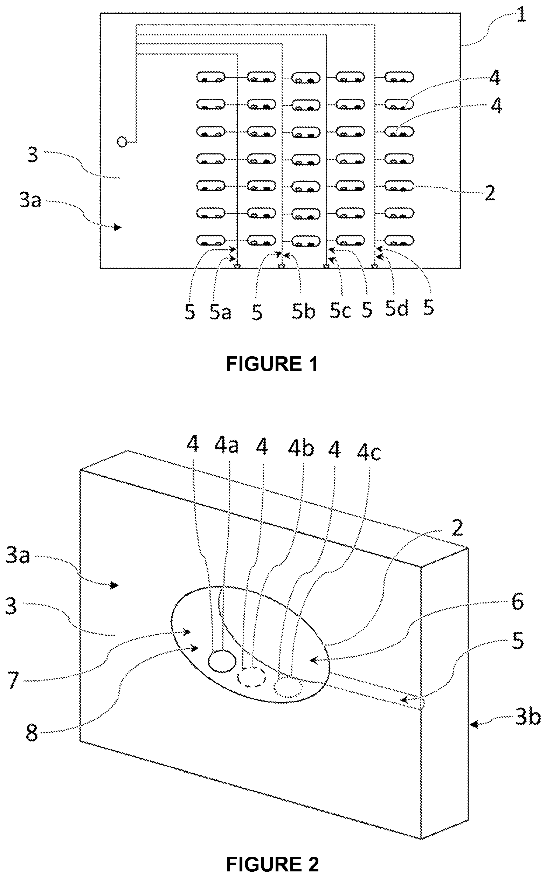

En référence à la **Figure 1****,** la carte d'analyse 1 comporte une pluralité de puits 2 pouvant être utilisés pour la mise en place d'un ou de plusieurs réactifs 4. Typiquement, une carte d'analyse comporte plus de 20 puits 2. Dans l'exemple illustré, la carte d'analyse 1 comprend 35 puits 2. Les puits 2 sont formés dans une plaque 3 et chaque puits 2 traverse la plaque 3 d'une première face 3a à une seconde face 3b opposée à la première face 3a. Une plaque 3 est définie généralement comme un élément de surface plane et peu épais. En d'autres termes, une plaque 3 comprend au moins deux faces 3a, 3b planes opposées l'une à l'autre et séparées par une épaisseur peu importante, i.e. l'épaisseur est au moins 10 fois inférieure aux largeurs et longueurs des faces 3a, 3b. Les longueurs et largeurs des faces 3a, 3b de la plaque 3 de la carte d'analyse 1 sont de préférence supérieures à 2 cm, et de préférence inférieures à 10 cm. L'épaisseur de la plaque 3 est de préférence inférieure à 5 mm, de préférence encore, inférieure à 3 mm, et l'épaisseur de la plaque 3 est de préférence supérieure à 1 mm. De préférence, l'épaisseur de la plaque 3 est constante sur la carte d'analyse 1, sauf en présence d'un puits 2 ou d'autres éléments fonctionnels qui creusent la plaque 3.

La plaque 3 peut être réalisée dans des matériaux comme Polypropylène, Polyéthylène, Polystyrène, Polycarbonate, PMMA, COP, POM, ABS, par exemple ou tout thermoplastiques pouvant être fabriqués par procédé de moulage par injection. De préférence, les puits 2 sont régulièrement réparties sur les faces 3a, 3b de la plaque 3, formant un réseau, et par exemple peuvent être alignés en différentes lignes et colonnes, ici par exemple cinq colonnes dans le sens de la largeur de la plaque 3 et sept lignes dans le sens de la longueur de la plaque 3. Une répartition angulaire des puits réactionnelle est également possible. La carte d'analyse 1 comprend également des canaux d'amenée 5a à 5d configurés pour alimenter les puits 2 en échantillon biologique liquide ou en un autre liquide tel qu'un fluide de référence utilisé par exemple pour des puits témoins, afin de remplir les puits 2 de liquide.

Chaque puits 2 présente au moins un réactif 4. Au moins certains réactifs 4 sont aptes à causer une réaction de luminescence en présence d'analytes, et en particulier en présence d'endotoxines. La carte d'analyse 1 peut ainsi être utilisée pour détecter la présence d'endotoxines dans l'échantillon biologique. Même si l'on s'intéresse plus particulièrement à l'analyse d'échantillon biologique pour y détecter une éventuelle présence d'endotoxines, l'invention peut concerner l'analyse d'échantillons biologiques pour détecter d'autres analytes comme par exemple le dosage d'analytes en biochimie ou en immunologie, le dosage de quantité d'ARNs ou d'ADNs en biologie moléculaire, la détection de présence de microorganismes en micro-volume, l'analyse d'antibiogramme en micro-volumes, le détection et quantification de microorganismes pour les applications agroalimentaire, cosmétique, pharmaceutique ou vétérinaire.

En référence à la **Figure 2****,** chaque puits 2 forme dans la plaque 3 un espace interne 6 défini par une surface latérale 7. La surface latérale 7 s'étend depuis la première face 3a vers la seconde face 3b, le long du puits 2. La surface latérale 7 forme l'interface entre la matière de la plaque 3 et l'espace interne 6. La surface latérale 7 comprend au moins une paroi 8. Dans le cas illustré en **Figure 2****,** l'espace interne 6 est de section ovale, la surface latérale 7 comprend donc une seule paroi 8. Une surface latérale 7 peut aussi être composée de plusieurs parois 8 comme cela sera illustré plus tard dans un autre mode de réalisation. Ces parois 8 sont rencontrées successivement lorsqu'on parcourt la surface latérale 7. On définit donc une paroi 8 comme une partie de surface latérale 7. Si la surface latérale 7 comprend plusieurs parois 8, ces parois 8 sont séparées des autres parois 8 par des arêtes. Une arête est une ligne d'intersection entre deux parois 8 et marque une discontinuité. Par exemple, l'arête marque une discontinuité angulaire ou de forme. Par exemple, l'arête peut marquer l'intersection entre une paroi 8 circulaire et une paroi 8 rectiligne. Encore par exemple, l'arête peut marquer l'intersection entre deux parois 8 circulaires qui se rejoignent, on peut alors imaginer un espace interne en forme de 8 vide, et donc une surface latérale 7 en forme de ruban formant un chiffre huit.

Chaque puits 2 présente au moins un réactif 4a, 4b ou 4c déposé sur sa surface latérale 7. De préférence, le réactif 4 une fois déposé est sec (déshydraté) et n'est donc pas sous forme liquide. Un réactif 4 forme ainsi un dépôt de matière sèche sur la surface latérale 7. Une carte d'analyse 1 dans laquelle les réactifs 4 sont déposés sur la surface latérale 7 des puits 2 présente plusieurs avantages. Tout d'abord, cela permet de mieux maitriser la position des réactifs 4 dans chaque puits 2. En effet, les réactifs 4 sont plus précisément localisés sur la surface latérale 7 des puits 2 par comparaison à des réactifs qui seraient déposés dans le fond des puits 2 et qui auraient une certaine propension à s'étaler car il n'existe alors pas de paroi angulaire permettant de maintenir les gouttes de réactifs par effet capillaire. Ainsi, il est possible de disposer les réactifs 4 de manière à s'assurer de l'interaction entre réactifs 4 et échantillon biologique même en présence de bulles d'air, par exemple en disposant les réactifs 4 en un endroit de la surface latérale 7 opposé à la direction de propagation des bulles d'air. De surcroît, cette meilleure maitrise de la position des réactifs 4 implique une meilleure interaction entre l'échantillon biologique et le réactif 4 puisque le réactif 4 est concentré sur une partie de la surface latérale 7 d'un puits 2. En outre, comme la position d'un réactif 4 sur la surface latérale 7 d'un puits 2 est connue, il est possible de savoir si l'échantillon biologique a été en contact avec le réactif 4 en vérifiant où l'échantillon biologique est positionné dans le puits 2.

Enfin, dans le cas où plusieurs réactifs 4 sont présents dans chaque puits 2, le fait que les réactifs 4 soient déposés sur la surface latérale 7 des puits 2 permet d'éviter le mélange entre les réactifs 4. En effet, si les réactifs 4 d'un même puits sont déposés sur le fond du puits 2, les réactifs 4 peuvent s'étaler jusqu'à entrer en contact durant l'opération de dépose ou durant la durée du séchage avant déshydratation complète, tandis que déposer sur la surface latérale 7 du puits 2 peut permettre d'empêcher cela. Tout d'abord, la surface latérale 7 du puits 2 présente une longueur bien plus importante que le diamètre (plus grande longueur) du fonds d'un puits 2, permettant d'éloigner beaucoup plus les réactifs les uns des autres. Cet aspect est d'autant plus important que les réactifs 4 sont généralement déposés sous forme de gouttes liquides avant d'être séchés, et ces gouttes ont tendance à s'étaler, risquant de se mélanger si elles sont trop proches. La séparation des réactifs est d'autant plus efficace lorsque deux réactifs 4 sont déposés sur deux parois 8 différentes d'une même surface latérale. Prenons comme exemple un puits 2 dont la surface latérale 7 est composée de deux parois 8 circulaires communicantes, une première paroi 8 et une deuxième paroi 8, de telle sorte que l'espace interne 6 prenne la forme du chiffre 8. Si un premier réactif 4 est déposé en forme de goutte (avant séchage) sur la première paroi 8 et un deuxième réactif 4 est déposé en forme de goutte (avant séchage) sur la deuxième paroi 8, les gouttes de réactifs 4 ne se mélangeront pas, étant séparées par une arête délimitant les deux parois 8. A l'inverse, si les réactifs étaient disposés au fond du puits 2, ils se seraient plus proches, non séparés par une arête, et donc probablement mélangés.

Le fait de déposer le réactif 4 sur la surface latérale 7 d'un puits 2 implique aussi que chaque puits 2 de la plaque 3 ne nécessite pas de fond lors de la dépose du réactif 4 dans chaque puits 2 de la carte d'analyse 1. Cela permet d'abord de relâcher une contrainte importante sur l'agencement respectifs en profondeur de la carte d'analyse 1 et de l'outil utilisé pour la dépose. Cela permet également de faciliter le contrôle qualité d'une plaque 3 remplie de réactifs 4 par ombroscopie, comme cela sera décrit plus tard, puisqu'aucune couche n'empêche le passage de rayons lumineux dans les espaces vides de l'espace interne 6 des puits 2. Une plaque 3 d'une carte d'analyse 1 sans fond permet également une réduction des coûts puisque la carte d'analyse 1 peut directement être insérée entre deux films transparents. Avantageusement, pour protéger les réactifs 4 des puits 2, chaque face 3a, 3b de la plaque 3 de la carte d'analyse 1 est recouverte d'un film transparent sur chaque face ou inséré dans un consommable comportant déjà les deux films après le dépôt et le séchage des réactifs 4 dans les puits 2. En conclusion, la présence de réactifs 4 sur une surface latérale 7 des puits 2 simplifie significativement le procédé de fabrication de la carte d'analyse 1 et le coût de la carte d'analyse 1.

Dans une variante de réalisation non représentée, il est possible de déposer le réactif sur la surface latérale d'un puits bien que la plaque soit pourvue d'un fond. Dans ce cas, l'outil utilisé pour la dépose s'insère partiellement dans le puits 2 sans toucher le fond et le réactif est déposé uniquement sur la surface latérale du puits, il est possible que selon la viscosité du dépôt, le réactif touche le fond de la plaque mais seulement de manière négligeable. Avantageusement, le fond de la plaque peut être opaque ou transparent. Lorsque le fond est opaque, l'analyse de luminescence est réalisée sur la face de la carte d'analyse opposée à celle sur laquelle le fond de la plaque est positionné. Le reste des caractéristiques décrites précédemment sur la plaque ou la carte d'analyse restent inchangées pour cette variante de réalisation, seule la caractéristique selon laquelle la plaque est pourvue d'un fond, diffère des autres modes de réalisation décrits et la méthode de dépose est identique.

Selon l'invention, chaque puits 2 présente plusieurs réactifs 4 différents déposés uniquement sur sa surface latérale 7, lesdits réactifs 4 différents comprenant un premier réactif 4a, 4b, 4c et un deuxième réactif 4a, 4b, 4c. Les réactifs 4 ne sont pas en contact et n'ont donc pas été mélangés lorsqu'ils étaient sous forme liquide, avant d'avoir été séchés. Les réactifs 4 sont séchés afin de s'assurer qu'ils ne se mélangeront pas afin de ne pas démarrer de manière incontrôlée la réaction entre les différents réactifs avant utilisation du consommable mettant en œuvre cette plaque 3. Les réactifs 4 d'un puits 2 ne doivent pas être mélangés pour ne pas réagir ensemble avant qu'un échantillon biologique n'ait été amené dans le puits 2 via le canal d'amenée 5. En effet, afin d'analyser l'échantillon biologique, il peut être nécessaire qu'une réaction en cascade ait lieu et que les réactifs 4 présents dans chaque puits 2 n'aient pas réagi entre eux préalablement. Par exemple, dans le cas de la détection d'endotoxines, des puits 2 peuvent contenir trois réactifs différents 4a, 4b, 4c : un agent de détection 4a dans un état non actif en l'absence d'activation exempt d'endotoxines, un agent d'activation 4b de l'agent de détection comprenant une enzyme et un substrat fluorigène, et un réactif de contrôle 4c adapté pour contrôler la fonctionnalité du réactif de détection. Dans cet exemple, les agents de détection et d'activation ne doivent pas réagir entre eux préalablement à l'introduction d'un échantillon biologique liquide via le canal d'amenée 5. Les réactifs 4a, 4b, 4c sont donc mis en contact uniquement lors de l'introduction d'un échantillon biologique liquide dans le puits 2.

La géométrie des puits 2 est adaptée pour éviter le mélange des réactifs 4a, 4b et 4c avant l'introduction du liquide de référence. Tout d'abord, si la surface latérale 7 d'un puits 2 comprend une unique paroi 8, le puits 2 peut être assez large, et donc la surface latérale 7 assez longue, pour permettre un espace de séparation entre chaque réactif 4 déposé sur la paroi 8. Par exemple, dans la **Figure 2** qui illustre un puits 2 dont la surface latérale 7 comprend une unique paroi 8, le puits 2 est assez large pour laisser un espace entre les réactifs 4a, 4b, 4c sur la surface latérale 7 qui assure la séparation des réactifs 4a, 4b, 4c. Par ailleurs, la surface latérale 7 des puits 2 peut avoir une forme qui permette une séparation entre chaque réactif 4a, 4b, 4c, en comportant une discontinuité telle qu'une arête entre deux réactifs 4a, 4b, 4c. La surface latérale 7 peut comprendre plusieurs parois 8 comme expliqué plus haut et La discontinuité entre les parois 8 d'une même surface latérale 7 permet un espace de séparation entre des réactifs 4a, 4b, 4c et même une frontière entre ceux-ci. On peut imaginer un puits 2 dont l'espace interne 6 comprend trois ronds, dont un desdits rond communique avec les deux autres ronds. La surface latérale 7 comprend trois parois 8 arrondies successives lorsqu'on parcourt la surface latérale 7, avec une discontinuité lors du passage d'un rond à l'autre, et donc d'une paroi 8 à l'autre. Chaque réactif 4a, 4b, 4c peut être disposé respectivement sur l'une des trois parois 8 de la surface latérale 7 de telle sorte que chaque réactif 4a, 4b, 4c soit disposé sur une paroi 8 différente, et donc à l'intérieur d'une partie distincte de l'espace interne 6 constituée par un rond. Les réactifs 4a, 4b, 4c sont donc séparés les uns des autres au sein d'un même puits 2.

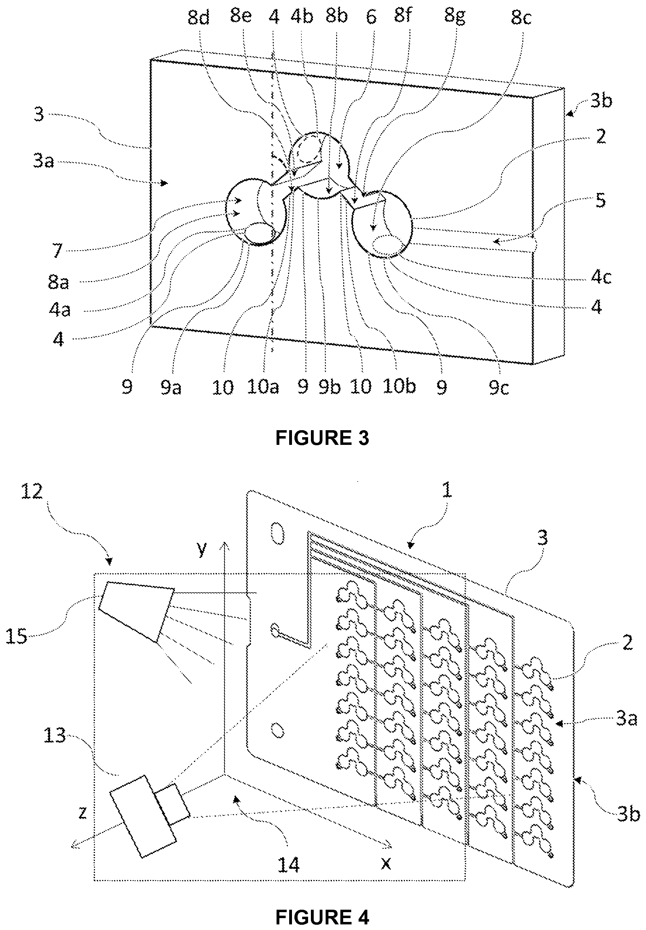

Selon l'invention, comme illustré sur la partie de plaque 3 en **Figure 3****,** chaque puits 2 comprend une pluralité de lobes 9, comme par exemple trois lobes 9a, 9b, 9c, et une pluralité de jonctions 10, comme par exemple deux jonctions 10a, 10b, connectant les lobes 9a, 9b, 9c. En d'autres termes, chaque puits 2 comprend plusieurs emplacements distincts, nommés lobes 9, qui communiquent entre eux via des jonctions 10. Dans ce mode de réalisation, la surface latérale 7 comprend plusieurs parois 8a, 8b, 8c, 8d, 8e, 8f, 8g, chaque paroi 8 étant associée à un lobe 9a, 9b, 9c ou à une jonction 10a, 10b, 10c.

De préférence, chaque lobe 9 est muni d'un réactif 4 différent. Chaque puits 2 présente plusieurs réactifs 4 différents déposés uniquement sur sa surface latérale 7, lesdits réactifs 4 différents comprenant, dans l'exemple illustré en **Figure 3****,** un premier réactif 4a et un deuxième réactif 4b. Le premier réactif 4a est déposé sur la paroi 8a d'un premier lobe 9a dudit puits 2 et le deuxième réactif 4b est déposé sur la paroi 8b d'un deuxième lobe 9b dudit puits 2. Dans l'exemple illustré en **Figure 3****,** un troisième réactif 4c est déposé sur une paroi 8c d'un troisième lobe 9c. Dans un mode de réalisation adapté à la détection d'endotoxines, chaque puits 2 comprends trois lobes 9a, 9b et 9c et deux jonctions 10a et 10b, la paroi 8a d'un premier lobe 9a présentant un agent de détection 4a, la paroi 8b d'un deuxième lobe 9b présentant un agent d'activation 4b et la paroi 8c d'un troisième lobe 9c présentant un réactif de contrôle 4c. Avantageusement, les réactifs 4a, 4b, 4c ne sont déposés que sur les parois 8a, 8b, 8c des lobes 9 et il n'y a pas de réactif 4 sur les parois 8d à 8g des jonctions 10. En effet, si un réactif 4 est présent dans une paroi 8d-8g d'une jonction 10, cela peut signifier qu'il va entrer en contact avec un autre réactif 4 disposé dans un lobe 9, ce qui n'est pas souhaité. En outre, on rappelle que les réactifs 4 une fois déposés sont de préférence sec et non pas sous forme liquide.

Préférentiellement, les lobes 9 de chaque puits 2 ont une forme elliptique et les jonctions 10 de chaque puits 2 sont rectilignes selon une direction de jonction. Encore de préférence, les lobes 9 de chaque puits 2 ont une forme circulaire. Ainsi, et comme illustré, les parois 8a, 8b, 8c d'un lobe 9a, 9b, 9c sont typiquement arrondies ou incurvées, tandis que les parois 8d, 8e, 8f, 8g d'une jonction 10a, 10b, 10c sont planes.

La carte d'analyse 1 est un système microfluidique. Le diamètre des lobes 9 est préférentiellement inférieur à 3 mm et est préférentiellement supérieur à 0,1 mm. La largeur des jonctions 10 est préférentiellement inférieure 1mm, et est préférentiellement supérieure à 0,05 mm La longueur des jonctions 10 est préférentiellement inférieure à 5 mm, et est préférentiellement supérieure à 0,05 mm. Ces dimensions d'une part sont suffisamment grandes pour permettre la circulation d'un liquide tel que l'échantillon biologique, et d'autres part sont suffisamment petites pour que des effets de tension superficielle d'un liquide permette de contenir des gouttes hors des jonctions 10 et également favoriser le mélange des réactifs 4 une fois l'échantillon introduit pour reprendre les réactifs 4 séchés et démarrer la réaction d'analyse.

Comme expliqué, cette structure composée de lobes 9 et de jonctions 10 permet d'isoler les différents réactifs 4 pour éviter qu'ils se mélangent avant leur séchage. Toujours dans un but d'éviter au maximum le mélange des réactifs 4, les lobes 9 de chaque puits 2 sont de préférence disposés d'une façon particulière les uns par rapport afin d'optimiser la surface à imager. Une orientation d'analyse est imposée à la carte d'analyse 1 lors de l'analyse de l'échantillon biologique au moyen de l'instrument de diagnostic in vitro 12. En référence à la **Figure 4****,** l'orientation d'analyse correspond à une orientation verticale de la carte d'analyse 1, dans laquelle la carte d'analyse 1 est disposée lorsqu'elle est analysée au moyen d'un instrument de diagnostic in vitro 12 comprenant un imageur 13, typiquement un fluorimètre, définissant un champ de vue 14. En revanche cette orientation dite verticale est purement indicative et utilisée en exemple, il n'y a pas de lien technique entre l'orientation de la carte et l'analyse en elle-même. Lors de l'analyse de la carte d'analyse 1, la carte d'analyse 1 est introduite dans l'instrument de diagnostic in vitro 12 dans cette orientation d'analyse, dans le champ de vue 14 de l'imageur 13. L'instrument de diagnostic in vitro 12 peut également comprendre une source lumineuse 15 configurée pour éclairer le champ de vue 14 avec une lumière dont la longueur d'onde est susceptible de mettre en évidence un phénomène de fluorescence, c'est-à-dire de provoquer l'émission d'une lumière de fluorescence après excitation d'un fluophore.

L'orientation d'analyse de la carte d'analyse 1 correspond de préférence à celle dans laquelle est disposée la carte d'analyse 1 en **Figure 4****.** L'axe y correspond à la direction verticale et l'axe x correspond à la direction horizontale. La **Figure 4** illustre une carte d'analyse 1 selon un certain mode de réalisation, comportant une pluralité puits 2 à plusieurs lobes 9, ici trois lobes 9. Dans ce cas de figure, l'orientation d'analyse de la carte d'analyse 1 est celle selon laquelle l'axe de chaque cylindre défini par chaque lobe 9 est perpendiculaire à la direction verticale. Ainsi, pour revenir à la disposition relative des lobes 9 d'un même puits 2, lorsque la carte d'analyse 1 est disposée dans l'orientation d'analyse, l'angle entre la direction verticale et la direction de jonction de la jonction 10 entre deux lobes 9 d'un puits 2 est de préférence supérieur à 10°, et est, de préférence, inférieur à 180°C (ou 0°C) La direction verticale et l'angle entre la direction verticale et la direction d'une jonction 10 sont illustrés en pointillés sur la **Figure 3****.** De surcroît, cela est permis par le fait que les réactifs 4 sont déposés sur la surface latérale 7 de chaque puits 2. En effet, en reprenant l'exemple de détection d'endotoxines, les réactifs 4 utilisés ont une mouillabilité élevée (angle de contact compris entre 75° et 90°). En conséquence, si des gouttes de réactifs 4 étaient déposées sur un fond des lobes 9 d'un puits 2, elles seraient très susceptibles de se mouvoir et de s'étaler de telle sorte à se mélanger les unes avec les autres avant leur séchage ce qui n'est pas souhaité. Ainsi, la structure imposée par les différents lobes 9 d'un puits 2 et le fait que les réactifs soient déposés sur la surface latérale 7 de chaque puits 2 garantit au mieux l'isolement des réactifs 4 déposés dans différents lobes 9 les uns par rapport aux autres.

Afin de permettre une réaction en cascade cohérente et d'éviter le mélange entre les différents réactifs 4 d'un puits 2, chaque jonction 10 connecte seulement deux lobes 9 d'un puits 2 et l'ensemble des lobes 9 et des jonctions 10 d'un puits 2 forme une chaîne ouverte. Par réaction en cascade cohérente, on entend une réaction dans laquelle l'ordre dans lequel les sous-réactions de la réaction ont lieu correspond à celui optimal pour obtenir des résultats exploitables. En d'autres termes, dans le cadre d'une réaction impliquant plusieurs sous-réactions et donc plusieurs réactifs 4, il peut être nécessaire qu'un certain réactif 4 réagisse avec l'échantillon biologique avant de réagir avec un autre réactif 4. Dans l'exemple de la détection d'endotoxines, il est préférable que l'échantillon biologique entre en contact avec l'agent d'activation 4b avant d'entrer en contact avec l'agent de détection 4a. Ainsi, la chaîne ouverte formée par l'ensemble des lobes 9 et des jonctions 10 d'un puits 2 permet de gérer l'ordre selon lequel les sous-réactions d'une réaction en cascade auront lieu. Le terme « chaîne ouverte » pour caractériser l'ensemble des lobes 9 et des jonctions 10 signifie que deux lobes 9 de l'ensemble des lobes 9 sont chacun reliés à une unique jonction 10. Ces deux lobes 9 sont en fait le premier lobe 9 et le dernier lobe 9 de la chaîne, autrement dit, ces deux lobes 9 constituent les extrémités de la chaîne. Bien évidemment, l'un des lobes 9 situé à une extrémité peut aussi, en plus d'être relié à une unique jonction 10, être relié par un canal d'amenée 5.

### Procédé de fabrication de la carte d'analyse

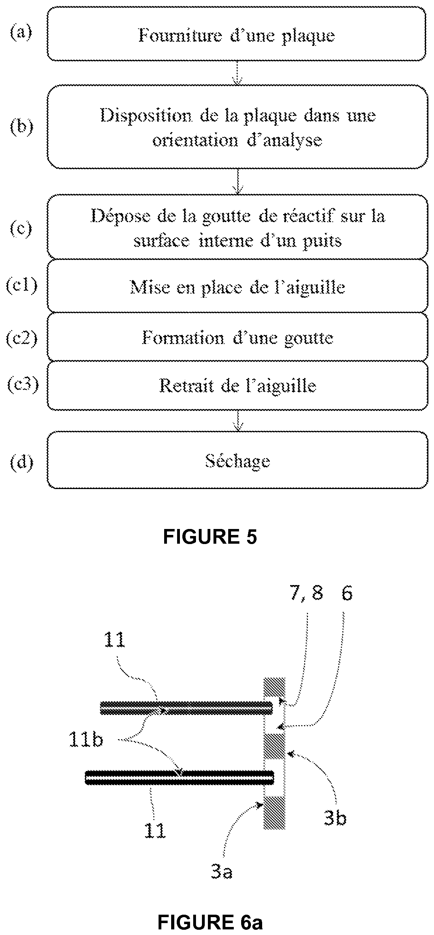

L'invention concerne également le procédé de fabrication de la carte d'analyse 1. Ce procédé est présenté en **Figure 5****.** Dans une étape a), une plaque 3 pourvue d'une pluralité de puits 2, qui, préférentiellement traversent ladite plaque 3 est fournie. Par fournie, on entend que le procédé de fabrication nécessite d'avoir à disposition une plaque 3 comprenant une pluralité de puits 2, les puits 2 étant de préférence vides de quelconque réactif 4.

Le présent procédé peut également comprendre une étape préalable a0) de moulage plastique par injection de la plaque 3.

Dans une étape b), la plaque 3 est disposée dans une orientation d'analyse. Dans cet exemple, l'orientation d'analyse correspond à l'orientation selon laquelle les faces 3a, 3b de la plaque 3 sont verticales.

Puis, dans une étape c), une goutte liquide de réactif 4 est déposée en contact avec la surface latérale 7 du puits 2. Cette étape c) est illustrée aux figures 6a à 6d selon lesquelles on a représenté une dépose simultanée de deux gouttes. Avantageusement, chaque goutte est déposée à l'aide d'une aiguille 11. De préférence, l'étape c) de dépose de goutte de réactif 4 comprend trois sous-étapes c1), c2) et c3), la sous-étape c1) étant la mise en place de l'aiguille 11, une extrémité de l'aiguille 11a étant positionnée jusque dans l'espace interne 6 du puits 2 tel qu'illustré en **Figure 6a****.** De préférence, l'extrémité 11a de l'aiguille ne dépasse pas de l'espace interne 6. L'extrémité 11a de l'aiguille ne traverse donc préférentiellement qu'une seule des deux faces 3a, 3b de la plaque 3, et se situe donc de préférence entre la première face 3a et la seconde face 3b. Sur la **Figure 6a****,** par exemple, l'extrémité 11a de l'aiguille traverse seulement la première face 3a.

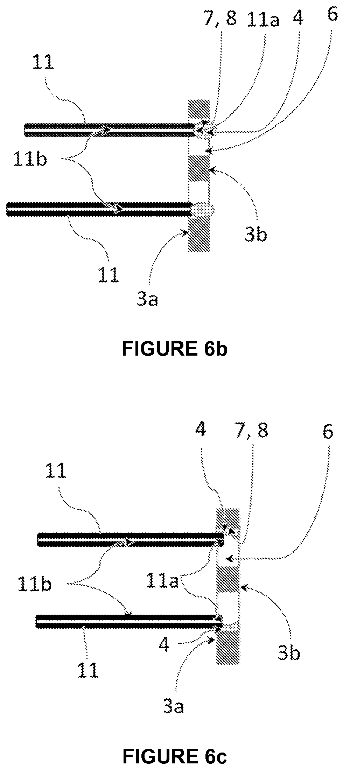

La sous-étape c2) correspond à la formation d'une goutte de réactif 4 à l'extrémité 11a de l'aiguille, en alimentant un canal 11b de l'aiguille avec un réactif 4 sous forme liquide. Une goutte se forme, et grossit jusqu'à contact de la goutte avec une paroi 8 de la surface latérale 7 d'un puits 2 comme illustré en **Figure 6b****.** La position de l'aiguille 11, et plus précisément la distance de l'extrémité 11a de l'aiguille par rapport à la surface latérale 7 dicte la taille de la goutte à laquelle la goutte touche la paroi. L'extrémité 11a de l'aiguille est de préférence décalée par rapport au centre de l'espace interne 6, et est donc plus proche de la partie la surface latérale 7 sur laquelle on veut déposer la goutte de réactif 4 permettant ainsi que collecter et retenir les gouttes dans les lobes dès leur formation à l'extrémité 11a des aiguilles 11.

Chaque goutte de réactif 4 formée a typiquement un diamètre supérieur à 0,8 mm et, de préférence encore, un diamètre supérieur à 1,2 mm. Le diamètre de chaque goutte de réactif 4 est par exemple environ égal à 1 mm. Un fois que chaque goutte entre en contact avec la paroi 8 de la surface latérale 7 du puits 2, elle se dépose sur la paroi 8 comme illustré **Figure 6c****.** Chaque goutte de réactif 4 déposée a de préférence un volume inférieur à 1 µL, de préférence encore, un volume inférieur à 0,65µL. De préférence, le volume de chaque goutte de réactif 4 déposée est supérieur à 0,1 µL et, encore de préférence, est supérieur à 0,35µL. Par exemple, chaque goutte de réactif 4 a un volume environ égal à 0,5 µL.

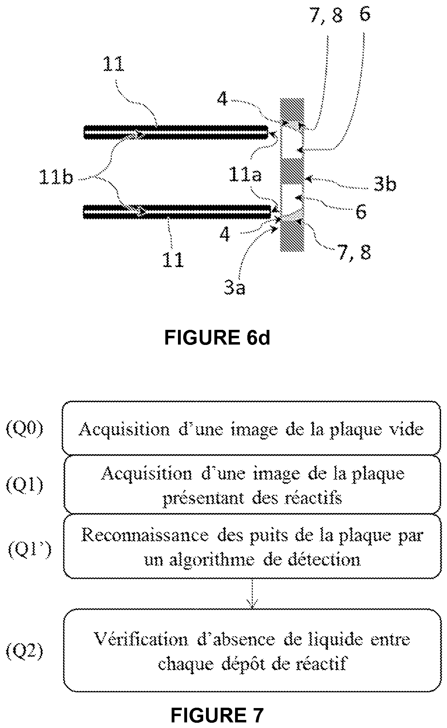

Une fois que chaque goutte est déposée, chaque aiguille 11 ou un support de plaque est retirée selon la sous-étape c3) hors de l'espace interne 6 du puits 2 comme illustré en **Figure 6d****.** Puis, de nouveau en référence à la **Figure 5****,** dans une étape d), chaque goutte de réactif 4 est séchée de telle sorte que l'on obtienne du réactif 4 séché sur la paroi 8 de la surface latérale 7 du puits 2. On comprendra bien sûr que les étapes c) et d) de dépose de goutte et de séchage sont mises en œuvre sur une pluralité de puits 2 de la plaque 3, de préférence, la totalité des puits 2 de la plaque 3 en simultané ou de manière séquentielle.

Dans un certain mode de réalisation selon lequel les puits 2 comprennent plusieurs lobes 9, chaque lobe 9 de chaque puits 2 est muni d'au moins une goutte de réactif 4, et de préférence d'une seule goutte de réactif 4. De préférence, les étapes c) et d) de dépose de goutte et de séchage sont effectuées simultanément pour chaque lobe 9 de plusieurs puits 2 de la plaque 3, et de préférence de chaque puits 2. Ainsi, ce mode de dépose de goutte permet le dépôt d'une pluralité de gouttes simultanément dans une microplaque, i.e. la plaque 3. En effet, en utilisant un support comprenant une pluralité d'aiguilles 11 et en approchant ce support d'une plaque 3 de telle sorte que chaque aiguille 11 ait son extrémité 11a dans l'espace interne 6 d'un puits 2 de la plaque 3, il est possible de déposer simultanément des gouttes de réactifs 4 sur une paroi 8 de la surface latérale 7 de plusieurs puits 2. En outre, cette méthode permet le dépôt simultané d'une pluralité de gouttes sur les parois 8 de chacun des lobes 9 de chaque puits 2 d'une plaque 3 sans que les gouttes ne se mélangent entre elles dans un même puits 2. En conséquence, des dizaines, voire des centaines de gouttes de réactifs 4 d'un volume de l'ordre du microlitre peuvent être déposées sans intervention humaine en un temps réduit. Si l'on prend l'exemple de la carte d'analyse 1 représentée en **Figure 4** comprenant 35 puits 2 de trois lobes 9, le procédé de fabrication revendiqué peut permettre de déposer simultanément sur la paroi 8 de chaque lobe 9 une goutte de réactif 4 et donc de déposer simultanément 105 gouttes de réactifs 4 dans la plaque 3 de la carte d'analyse 1.

De préférence, l'extrémité 11a d'une aiguille utilisée pour le dépôt est recouverte de revêtement antiadhésif. Par exemple, ce revêtement peut être un revêtement hydrophobe à base de téflon tel que le polytetrafluoroéthylène (PTFE). De cette manière, la goutte qui se forme à l'extrémité de l'aiguille 11a ne se déforme pas et ne coule pas le long de l'aiguille 11, mais garde au contraire une forme ronde permettant une meilleure maitrise des volumes déposés dans la plaque 3. En outre, dans le cas où plusieurs aiguilles 11 sont disposées côte à côte dans un support, cela permet que les gouttes n'entrent pas en contact et ne se mélangent pas comme illustré en figures 6a à 6d. De plus, le revêtement rend plus générique cette solution, permettant de déposer des liquides ayant des tensions superficielles très variée.

Préférentiellement, le présent procédé de fabrication comprend une étape e) d'insertion de la plaque 3 entre deux films, préférentiellement transparents, et d'adhésion des films sur la plaque 3 de sorte à protéger les réactifs 4 et à fermer le réseau fluidique des puits 2. Les films forment les extrémités des puits 2 fermés et sont dépourvus de réactifs 4.

### Procédé de contrôle qualité

Pour s'assurer que la plaque 3 est correctement munie en réactifs 4, c'est-à-dire que chaque puits 2 contient une goutte de réactif 4 et que, dans le cas où les puits 2 comprennent plusieurs lobes 9, les gouttes présentes dans différents lobes 9 d'un même puits 2 ne se sont pas mélangées, un procédé de contrôle qualité d'une plaque 3 est proposé avant le séchage des réactifs 4 (sous-étape c3). Plus précisément, un procédé de contrôle qualité d'une plaque 3 pourvue d'une pluralité de puits 2 traversant ladite plaque 3, chaque puits 2 présentant une pluralité de réactifs 4 liquides déposés séparément sur ses parois 8, est proposé. Le procédé est décrit par la **Figure 7****.**

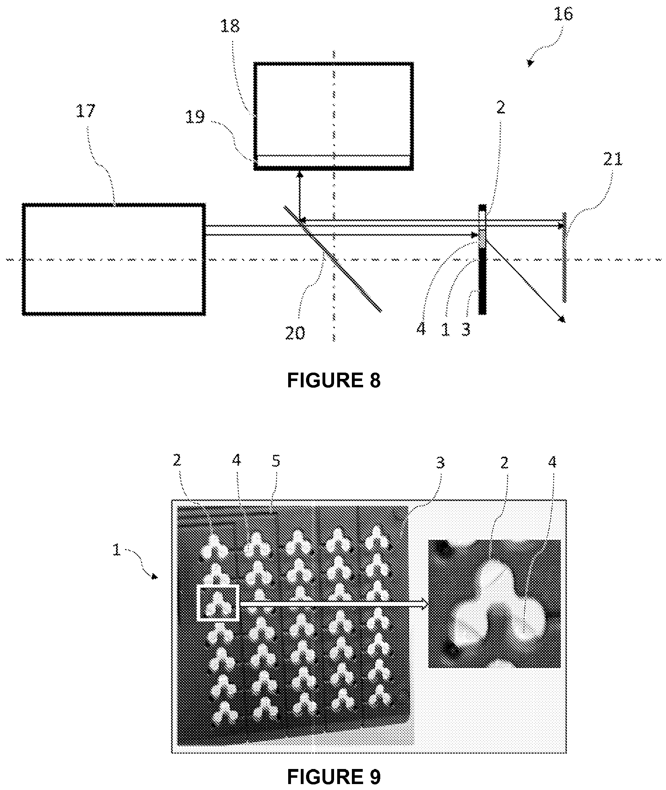

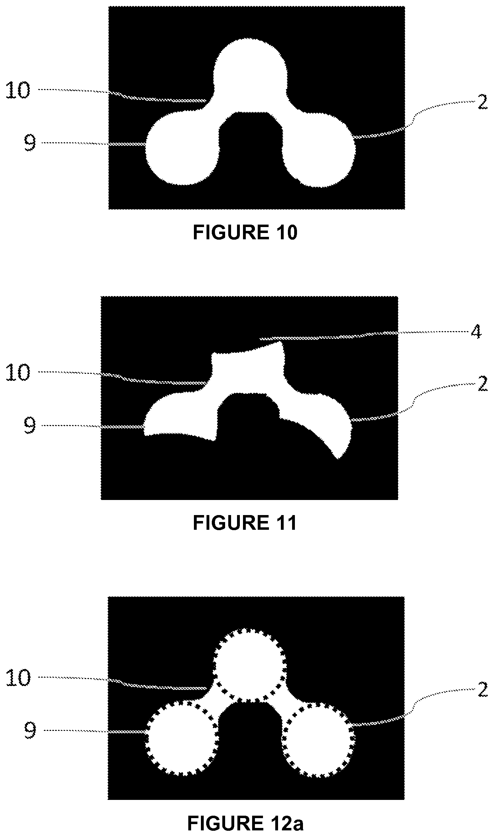

Dans une étape Q1), une image de la plaque 3 dont les puits 2 présentent une pluralité de gouttes de réactifs 4 liquides est acquise comme illustré en **Figure 9** **ou en** **Figure 11****.** Préférentiellement, le procédé de contrôle qualité comprend une étape préalable Q0) d'acquisition d'une image de la plaque 3 vide illustrée en **Figure 10****.** En d'autres termes, l'étape Q0) consiste à acquérir une image de la plaque 3 lorsqu'aucun réactif 4 n'a été déposé sur les parois 8 de ses puits 2. De manière avantageuse, les images acquises aux étapes Q1) et Q0) du procédé de contrôle qualité sont des images ombroscopiques. En référence à la **Figure 8****,** une image ombroscopique peut par exemple être acquise grâce à un système de contrôle 16 comprenant une source lumineuse 17 telle qu'une lampe télécentrique et un appareil d'acquisition d'image 18, par exemple pourvu d'une lentille télécentrique 19. La plaque 3 est positionnée dans son orientation d'analyse (typiquement avec les faces 3a, 3b verticales) entre la source lumineuse 17 et l'appareil d'acquisition d'image 18. Des rayons de lumière coaxiaux sont émis par la source lumineuse 17 en direction de la plaque 3. Ces rayons lumineux traversent les espaces internes 6 des puits 2 de la plaque 3 ou sont absorbés par les faces 3a, 3b de la plaque 3. Les rayons lumineux qui traversent les espaces internes 6 des puits 2 sont déviés par des réactifs 4 liquides présents dans les puits 2 ou traversent sans déviation les parties vides des espaces internes 6, en l'absence de réactifs 4 liquides sur leurs trajets. L'appareil d'acquisition d'image 18 ne reçoit que les rayons lumineux qui ne sont ni déviés, ni absorbés par les faces 3a, 3b de la plaque 3, c'est-à-dire les rayons lumineux ayant traversé une partie vide d'un espace interne 6. Grâce à ce système de contrôle 16, on obtient une image en noir et blanc de la plaque 3. Les puits 2 sont reconnaissables par leurs parties d'espace interne 6 vide qui sont en blanc sur l'image. Toujours en référence à la **Figure 8****,** le système de contrôle 16 peut comprendre des miroirs 20, 21 ce qui permet de gagner en compacité. Par exemple, le système de contrôle 16 peut comporter deux miroirs 20, 21, dont un miroir totalement réfléchissant 21 et un miroir semi réfléchissant 20. Les rayons lumineux émis par la source lumineuse 17 traversent le miroir semi réfléchissant 20 puis la plaque 3 positionnée dans son orientation d'analyse. Les rayons lumineux non déviés ou absorbés atteignent le miroir totalement réfléchissant 21 qui réfléchit lesdits rayons. Ces rayons traversent à nouveau la plaque 3, jusqu'à atteindre le miroir semi-réfléchissant 20 qui réfléchit les rayons vers l'appareil d'acquisition d'image 18.

En outre, le procédé de contrôle qualité comprend de préférence une étape Q1') de reconnaissance par un algorithme de détection des puits 2 de la plaque 3 et d'identification de régions d'intérêt pour chaque puits 2 de la plaque 3. Par détection de puits 2, on entend que les puits 2 de la plaque 3 sont localisés dans une image acquise. Dans le cas où chaque puits 2 comprend des lobes 9 et des jonctions 10, la détection peut impliquer la localisation de lobes 9 et de jonctions 10. L'algorithme de détection des puits 2 peut mettre en œuvre une fonction de détection qui dépend de la forme connue des puits 2, adaptée à la géométrie des puits 2 de la plaque 3 et/ou à une répartition des puits 2 sur la plaque 3. Par exemple, si l'on souhaite détecter les lobes 9 et que les lobes 9 ont une forme circulaire, on peut utiliser une fonction de détection de bord circulaire, comme illustré en **Figure 12a****.**

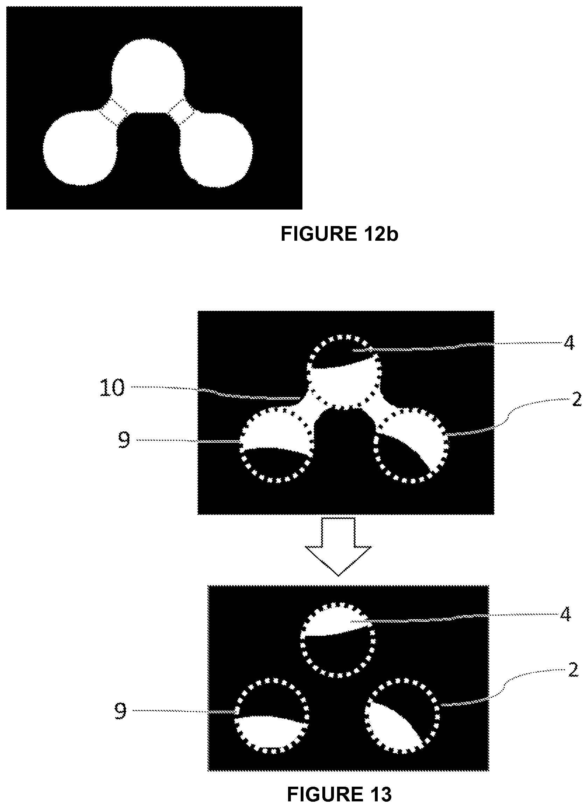

Ensuite, des régions d'intérêt sont identifiées. Avantageusement, au moins une région d'intérêt est identifiée pour chaque puits 2 de la plaque 3. L'identification de régions d'intérêt peut, par exemple, correspondre à l'identification des jonctions 10 comme illustré en **Figure 12b****.** En effet, dans le cas où l'on souhaite déterminer que les réactifs 4 présents dans les différents lobes 9 d'un puits 2 ne se sont pas mélangés, on pourra vérifier que les jonctions 10 sont vides de tout réactif. En conséquence, dans ce cas, les jonctions 10 constituent des régions d'intérêt. Les régions d'intérêt peuvent également être les lobes 9, notamment afin de s'assurer de la présence de réactifs. Il est bien entendu possible de combiner plusieurs approches.

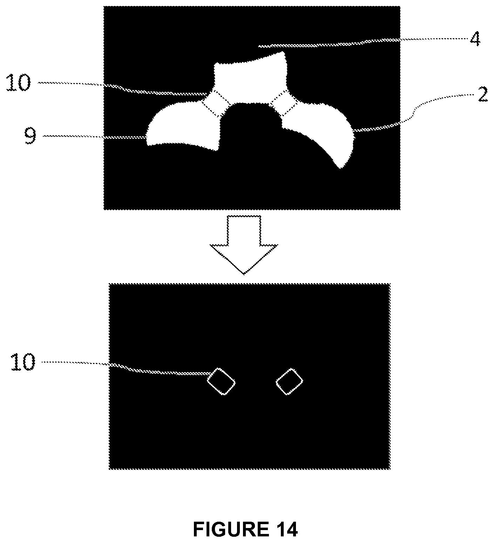

Le procédé de contrôle qualité comprend donc une étape Q2) de vérification d'absence de liquide entre chaque dépôt de réactif 4 liquide. Comme expliqué, cela peut, par exemple, revenir à vérifier qu'aucun réactif 4 n'est présent dans les jonctions 10 d'un puits 2. De préférence, cette étape Q2) comprend la comparaison de pixels de l'image acquise à l'étape Q1) et de pixels de l'image acquise à l'étape Q0). Il est également possible de faire des comparaisons sur des regroupements de pixels. Cette comparaison permet de déterminer où sont présents les réactifs 4 au sein d'un puits 2 et, en conséquence, d'identifier un manque de réactifs 4, un surplus de réactifs 4 ou la présence non souhaitée de réactifs 4 dans une certaine partie d'un puits 2. Préférentiellement, comparer des pixels signifie comparer leur valeur d'intensité lumineuse et, encore de préférence, comparer leurs niveaux de gris. En outre, de préférence, chaque pixel comparé d'une image acquise à l'étape Q1) est comparé au pixel situé au même endroit de l'image acquise à l'étape Q0). Avantageusement, ce sont uniquement les pixels correspondant aux régions d'intérêt pour chaque puits qui sont considérés dans le cadre de cette comparaison. En effet, les régions d'intérêt des puits 2 de la plaque 3 sont les localisations précises où l'on souhaite détecter une présence ou une absence de réactif 4. Par exemple, les régions d'intérêt peuvent être les jonctions 10 des puits 2 et l'on peut souhaiter détecter si du réactif 4 est présent dans les jonctions 10. Cela signifierait probablement que des réactifs 4 de deux différents lobes 9 d'un puits 2 se sont mélangés. Par ailleurs, cette étape Q2) de comparaison peut être assimilée à une soustraction des deux images. Si des pixels de l'image de la plaque 3 remplie de réactifs 4 acquise à l'étape Q1) ont une valeur différente de la valeur d'intensité lumineuse des mêmes pixels de l'image de la plaque 3 vide acquise à l'étape Q0), cela peut signifier qu'un réactif 4 est présent dans la plaque 3 à la position correspondant auxdits pixels comme illustré en **Figure 13** pour des régions d'intérêt au niveau des lobes 9 et en **Figure 14** pour des régions d'intérêt au niveau des jonctions 10. Des valeurs de seuils de différences de valeurs d'intensité lumineuse de pixels et de nombre de pixels dont la valeur d'intensité lumineuse est différente entre les images acquises aux étapes Q1) et Q0) peuvent être définies. Ainsi, à partir d'un certain nombre de pixels dont la valeur d'intensité lumineuse est différente d'une certaine différence de valeur d'intensité lumineuse de pixels entre les deux images, il peut être décrété que du réactif 4 est présent dans la plaque 3 à la position correspondant auxdits pixels. À partir du nombre de pixels qui sont identifiés comme correspondant à des espaces emplis de réactif 4, une surface de pixels correspondant à des espaces emplis de réactif 4 peut être extraite. Cette surface peut être utilisée et extrapolée de manière à obtenir une valeur de volume de réactif 4 estimé présent dans les puits 2 de la plaque 3.

L'invention n'est pas limitée au mode de réalisation décrit et représenté aux figures annexées. L'invention n'est limitée que par les revendications annexées.

## Revendications

1. Carte d'analyse (1) pour l'analyse d'un échantillon biologique au moyen d'un instrument de diagnostic in vitro, la carte d'analyse (1) comprenant une pluralité de puits (2) formés dans une plaque (3) présentant une première face (3a) et une deuxième face (3b) opposée à la première face (3a), des puits (2) contenant au moins un réactif (4),
la carte d'analyse (1) comprenant un canal d'amenée (5) d'un échantillon liquide au puits (2),
**caractérisée en ce que** chaque puits (2) forme dans ladite plaque (3) un espace interne (6) défini par une surface latérale (7) s'étendant depuis la premier face (3a) vers la second face (3b) le long des puits (2), ladite surface latérale (7) comprenant au moins une paroi (8), et **en ce que** le réactif (4) d'un puits est déposé et séché uniquement sur la surface latérale (7) dudit puits (2)
dans laquelle chaque puits (2) comprend une pluralité de lobes (9) et une pluralité de jonctions (10) connectant les lobes (9),
dans laquelle chaque puits (2) présente plusieurs réactifs (4) différents déposés uniquement sur sa surface latérale (7), lesdits réactifs (4) différents comprenant un premier réactif (4a) et un deuxième réactif (4b), et dans laquelle un puits (2) contient au moins le premier réactif (4a) déposé sur une paroi (8a) d'un premier lobe (9a) dudit puits (2) et le deuxième réactif (4b) déposé sur une paroi (8b) d'un deuxième lobe (9b) dudit puits (2).

2. Carte d'analyse (1) selon la revendication 1, dans laquelle chaque puits (2) traverse la plaque (3) d'une face (3a) à une autre face (3b) de ladite plaque (3).

3. Carte d'analyse (1) selon l'une quelconque des revendications 1 ou 2, dans laquelle le deuxième réactif (4b) est un agent d'activation du premier réactif (4a) et le premier réactif (4a) activé est apte à réagir avec l'échantillon liquide lorsque le premier réactif (4a) activé est mis en contact avec l'échantillon liquide.

4. Carte d'analyse (1) selon l'une des revendications 1 à 3, dans laquelle les lobes (9) d'un puits (2) ont une forme elliptique et les jonctions (10) d'un puits (2) sont rectilignes selon une direction de jonction.

5. Carte d'analyse (1) selon l'une des revendications 1 à 4, dans laquelle une jonction (10) connecte seulement deux lobes (9) d'un puits (2) et l'ensemble des lobes (9) et des jonctions (10) d'un puits (2) forme une chaîne ouverte.

6. Carte d'analyse (1) selon l'une quelconque des revendications 1 à 5, dans laquelle la carte d'analyse (1) est associée à une orientation d'analyse imposée à la carte d'analyse (1) lors de l'analyse de l'échantillon biologique au moyen de l'instrument de diagnostic in vitro, cette orientation d'analyse étant **caractérisée en ce que** les faces (3a, 3b) de la plaque (3) s'étendent dans la direction déterminée, préférentiellement une direction verticale, et dans laquelle un premier lobe (9a) d'un puits (2) est connecté à un deuxième lobe (9b) dudit puits (2) par une jonction (10) selon une direction de jonction et l'angle entre la direction déterminée et ladite direction de jonction est de préférence supérieur à 10°.

7. Carte d'analyse (1) selon l'une quelconque des revendications 1 à 6, dans laquelle le diamètre des lobes (9) des puits (2) est supérieur à 0,1 mm, la largeur des jonctions (10) est inférieure à 1 mm et la longueur des jonctions (10) est supérieure à 0,05 mm.

8. Carte d'analyse (1) selon l'une quelconque des revendications précédentes, dans laquelle chaque face de la plaque (3) est recouverte d'un film transparent au moins sur une face destinée à permettre l'analyse de la carte d'analyse.

9. Carte d'analyse (1) selon l'une quelconque des revendications précédentes, dans laquelle les réactifs (4) d'analyse sont aptes à causer une réaction de luminescence en présence d'endotoxines.

10. Procédé de fabrication d'une carte d'analyse (1) selon l'une quelconque des revendications précédentes, comprenant les étapes suivantes :
a) fourniture d'une plaque (3) pourvue d'une pluralité de puits (2),
b) disposition de la plaque (3) dans une orientation d'analyse dans laquelle les faces (3a, 3b) de la plaque (3) s'étendent dans la direction déterminée,
c) dépose d'au moins une goutte de liquide de réactif (4) en contact avec une paroi (8) de la surface latérale (7) du puits (2),
d) séchage de la au moins une goutte de de réactif (4) et obtention de réactif (4) déposé sur la paroi (8) de la surface latérale (7) du puits (2).

11. Procédé selon la revendication précédente, comprenant une étape e) d'insertion de la plaque (3) entre deux films, et adhésion des films sur la plaque (3).

12. Procédé selon l'une des revendications 10 et 11, dans lequel l'étape c) de dépose de la goutte de réactif (4) comprend des étapes de :
c1) mise en place d'une aiguille avec une extrémité de l'aiguille (11a) dans l'espace interne (6) d'un puits (2),
c2) formation d'une goutte à l'extrémité de l'aiguille (11a), jusqu'à contact avec une paroi (8) de la surface latérale (7),
c3) retrait de l'aiguille (11).

13. Procédé de contrôle qualité d'une d'une carte d'analyse fabriquée selon l'une quelconque des revendications 10 à 12, comprenant, entre des étapes c) et d), des étapes de:
Q1) acquisition d'une image de ladite plaque (3),
Q2) vérification d'absence de liquide entre des dépôts de réactif (4) liquide.

14. Procédé de contrôle qualité selon la revendication précédente, comprenant une étape Q0) d'acquisition d'une image de ladite plaque (3) vide, et l'étape Q2) comprend la comparaison de pixels de l'image acquise à l'étape Q1) et de pixels de l'image acquise à l'étape Q0).

15. Procédé de contrôle qualité selon l'une quelconque des revendications 13 ou 14, dans lequel l'image de la plaque est une image ombroscopique.

16. Procédé de contrôle qualité selon l'une quelconque des revendications 13 à 15, comprenant une étape a1) de reconnaissance par un algorithme de détection des puits (2) de la plaque (3) et identification de régions d'intérêt pour chaque puits (2) de la plaque (3) pour lesquelles est vérifiée l'absence de liquide.

17. Procédé de contrôle qualité selon la revendication 16, dans lequel chaque puits (2) comprend une pluralité de lobes (9) et une pluralité de jonctions (10) connectant les lobes (9), les lobes étant destinés à recevoir les dépôts de réactifs (4) liquides, et les régions d'intérêt comprennent les jonctions (10), l'absence de liquide dans lesdites jonctions (10) étant vérifiée.

## Patentansprüche

1. Analysekarte (1) zur Analyse einer biologischen Probe mittels eines In-vitro-Diagnoseinstruments, wobei die Analysekarte (1) eine Vielzahl von Wells (2) umfasst, die in einer Platte (3) gebildet sind, die eine erste Seite (3a) und eine zweite Seite (3b), die zu der ersten Seite (3a) entgegengesetzt ist, aufweist, wobei die Wells (2) mindestens ein Reagenz (4) enthalten, wobei die Analysekarte (1) einen Zufuhrkanal (5) zum Zuführen einer flüssigen Probe zu dem Well (2) umfasst,
**dadurch gekennzeichnet, dass** jedes Well (2) in der Platte (3) einen Innenraum (6) bildet, der durch eine seitliche Fläche (7) definiert wird, die sich von der ersten Seite (3a) zu der zweiten Seite (3b) entlang der Wells (2) erstreckt, wobei die seitliche Fläche (7) mindestens eine Wand (8) umfasst, und dadurch, dass das Reagenz (4) eines Wells nur auf der seitlichen Fläche (7) des Wells (2) abgelagert und getrocknet ist,
wobei jedes Well (2) eine Vielzahl von Kammern (9) und eine Vielzahl von Verbindungen (10), die die Kammern (9) verbinden, umfasst,
wobei jedes Well (2) mehrere unterschiedliche Reagenzien (4) aufweist, die nur auf seiner seitlichen Fläche (7) abgelagert sind, wobei die unterschiedlichen Reagenzien (4) ein erstes Reagenz (4a) und ein zweites Reagenz (4b) umfassen und wobei ein Well (2) mindestens das erste Reagenz (4a), das auf einer Wand (8a) einer ersten Kammer (9a) des Wells (2) abgelagert ist, und das zweite Reagenz (4b), das auf einer Wand (8b) einer zweiten Kammer (9b) des Wells (2) abgelagert ist, enthält.

2. Analysekarte (1) nach Anspruch 1, wobei jedes Well (2) die Platte (3) von einer Seite (3a) zu einer anderen Seite (3b) der Platte (3) durchquert.

3. Analysekarte (1) nach einem der Ansprüche 1 oder 2, wobei das zweite Reagenz (4b) ein Aktivierungsmittel für das erste Reagenz (4a) ist und das aktivierte erste Reagenz (4a) geeignet ist, mit der flüssigen Probe zu reagieren, wenn das aktivierte erste Reagenz (4a) mit der flüssigen Probe in Kontakt gebracht wird.

4. Analysekarte (1) nach einem der Ansprüche 1 bis 3, wobei die Kammern (9) eines Wells (2) eine elliptische Form haben und die Verbindungen (10) eines Wells (2) entlang einer Verbindungsrichtung gerade sind.

5. Analysekarte (1) nach einem der Ansprüche 1 bis 4, wobei eine Verbindung (10) nur zwei Kammern (9) eines Wells (2) verbindet und sämtliche Kammern (9) und Verbindungen (10) eines Wells (2) eine offene Kette bilden.

6. Analysekarte (1) nach einem der Ansprüche 1 bis 5, wobei die Analysekarte (1) einer Analyseausrichtung zugeordnet ist, die der Analysekarte (1) bei der Analyse der biologischen Probe mittels des In-vitro-Diagnoseinstruments vorgegeben ist, wobei diese Analyseausrichtung **dadurch gekennzeichnet ist, dass** sich die Seiten (3a, 3b) der Platte (3) in die bestimmte Richtung, vorzugsweise eine vertikale Richtung, erstrecken, und wobei eine erste Kammer (9a) eines Wells (2) mit einer zweiten Kammer (9b) des Wells (2) durch eine Verbindung (10) entlang einer Verbindungsrichtung verbunden ist und der Winkel zwischen der bestimmten Richtung und der Verbindungsrichtung vorzugsweise mehr als 10° beträgt.

7. Analysekarte (1) nach einem der Ansprüche 1 bis 6, wobei der Durchmesser der Kammern (9) der Wells (2) mehr als 0,1 mm beträgt, die Breite der Verbindungen (10) weniger als 1 mm beträgt und die Länge der Verbindungen (10) mehr als 0,05 mm beträgt.

8. Analysekarte (1) nach einem der vorhergehenden Ansprüche, wobei jede Seite der Platte (3) mindestens auf einer Seite, die dazu bestimmt ist, die Analyse der Analysekarte zu ermöglichen, mit einer transparenten Folie bedeckt ist.

9. Analysekarte (1) nach einem der vorhergehenden Ansprüche, wobei die Analysereagenzien (4) geeignet sind, in Gegenwart von Endotoxinen eine Lumineszenzreaktion zu verursachen.

10. Verfahren zur Herstellung einer Analysekarte (1) nach einem der vorhergehenden Ansprüche, das die folgenden Schritte umfasst:
a) Bereitstellen einer Platte (3), die mit einer Vielzahl von Wells (2) versehen ist,
b) Anordnen der Platte (3) in einer Analyseausrichtung, in der sich die Seiten (3a, 3b) der Platte (3) in die bestimmte Richtung erstrecken,
c) Ablagern mindestens eines Tropfens Reagenzflüssigkeit (4) in Kontakt mit einer Wand (8) der seitlichen Fläche (7) des Wells (2),
d) Trocknen des mindestens einen Tropfens des Reagenz (4) und Erhalten eines Reagenz (4), das auf der Wand (8) der seitlichen Fläche (7) des Wells (2) abgelagert ist.

11. Verfahren nach dem vorhergehenden Anspruch, umfassend einen Schritt e) des Einfügens der Platte (3) zwischen zwei Folien und des Klebens der Folien auf die Platte (3).

12. Verfahren nach einem der Ansprüche 10 und 11, wobei der Schritt c) des Ablagerns des Tropfens eines Reagenz (4) die folgenden Schritte umfasst:
c1) Einsetzen einer Nadel mit einem Ende der Nadel (11a) in den Innenraum (6) eines Wells (2),
c2) Bilden eines Tropfens an dem Ende der Nadel (11a), bis zum Kontakt mit einer Wand (8) der seitlichen Fläche (7),
c3) Entfernen der Nadel (11).

13. Verfahren zur Qualitätskontrolle einer nach einem der Ansprüche 10 bis 12 hergestellten Analysekarte, umfassend zwischen den Schritten c) und d) die folgenden Schritte:
Q1) Erfassen eines Bildes der Platte (3),
Q2) Überprüfen des Nichtvorhandenseins von Flüssigkeit zwischen Ablagerungen eines flüssigen Reagenz (4).

14. Verfahren zur Qualitätskontrolle nach dem vorhergehenden Anspruch, umfassend einen Schritt Q0) des Erfassens eines Bildes der leeren Platte (3) und wobei der Schritt Q2) das Vergleichen von Pixeln des im Schritt Q1) erfassten Bildes und von Pixeln des in Schritt Q0) erfassten Bildes umfasst.

15. Verfahren zur Qualitätskontrolle nach einem der Ansprüche 13 oder 14, wobei das Bild der Platte ein Schattenbild ist.

16. Verfahren zur Qualitätskontrolle nach einem der Ansprüche 13 bis 15, umfassend einen Schritt a1) des Erkennens der Wells (2) der Platte (3) durch einen Detektionsalgorithmus und des Identifizierens von Bereichen von Interesse für jedes Well (2) der Platte (3), für die das Nichtvorhandensein von Flüssigkeit überprüft wird.

17. Verfahren zur Qualitätskontrolle nach Anspruch 16, wobei jedes Well (2) eine Vielzahl von Kammern (9) und eine Vielzahl von die Kammern (9) verbindenden Verbindungen (10) umfasst, wobei die Kammern dazu bestimmt sind, die Ablagerungen von flüssigen Reagenzien (4) aufzunehmen und die Bereiche von Interesse die Verbindungen (10) umfassen, wobei das Nichtvorhandensein von Flüssigkeit in den Verbindungen (10) überprüft wird.

## Claims

1. An analysis card (1) for analysing a biological sample by means of an in vitro diagnostics instrument, the analysis card (1) comprising a plurality of wells (2) formed in a plate (3) having a first face (3a) and a second face (3b) opposite to the first face (3a), wells (2) containing at least one reagent (4), the analysis card (1) comprising a supply channel (5) for supplying a liquid sample to the well (2),
**characterized in that** each well (2) forms in said plate (3) an internal space (6) defined by a lateral surface (7) extending from the first face (3a) to the second face (3b) along the wells, said lateral surface (7) comprising at least one wall (8), and **in that** the reagent (4) of a well is deposited and dried only on the lateral surface (7) of said well (2),
wherein each well (2) includes a plurality of lobes (9) and a plurality of junctions (10) connecting the lobes (9),
wherein each well (2) has several different reagents (4) deposited only on its lateral surface (7), said different reagents (4) comprising a first reagent (4a) and a second reagent (4b), and wherein a well (2) contains at least the first reagent (4a) deposited on a wall (8a) of a first lobe (9a) of said well (2) and the second reagent (4b) deposited on a wall (8b) of a second lobe (9b) of said well (2).

2. The analysis card (1) as claimed in claim 1, wherein each well (2) passes through the plate (3) from one face (3a) to another face (3b) of said plate (3).

3. The analysis card (1) as claimed in claim 1 or 2, wherein the second reagent (4b) is an activation agent for activating the first reagent (4a) and the activated first reagent (4a) is capable of reacting with the liquid sample when the activated first reagent (4a) is brought into contact with the liquid sample.

4. The analysis card (1) as claimed in one of claims 1 to 3, wherein the lobes (9) of a well (2) have an elliptical shape and the junctions (10) of a well (2) are rectilinear in a junction direction.

5. The analysis card (1) as claimed in one of claims 1 to 4, wherein a junction (10) connects only two lobes (9) of a well (2) and all of the lobes (9) and junctions (10) of a well (2) form an open chain.

6. The analysis card (1) as claimed in any one of claims 1 to 5, wherein the analysis card (1) is associated with an analysis orientation imposed on the analysis card (1) during the analysis of the biological sample by means of the in vitro diagnostics instrument, this analysis orientation being **characterized in that** the faces (3a, 3b) of the plate (3) extend in the predetermined direction, preferably a vertical direction, and wherein a first lobe (9a) of a well (2) is connected to a second lobe (9b) of said well (2) by a junction (10) in a junction direction and the angle between the predetermined direction and said junction direction is preferably greater than 10°.

7. The analysis card (1) as claimed in any one of claims 1 to 6, wherein the diameter of the lobes (9) of the wells (2) is greater than 0.1 mm, the width of the junctions (10) is less than 1 mm, and the length of the junctions (10) is greater than 0.05 mm.

8. The analysis card (1) as claimed in any one of the preceding claims, wherein each face of the plate (3) is covered with a transparent film at least on a face intended to allow analysis of the analysis card.

9. The analysis card (1) as claimed in any one of the preceding claims, wherein the analysis reagents (4) are adapted to cause a luminescence reaction in the presence of endotoxins.

10. A method for manufacturing an analysis card (1) as claimed in any one of the preceding claims, comprising the following steps:
a) supplying a plate (3) provided with a plurality of wells (2),
b) positioning the plate (3) in an analysis orientation in which the faces (3a, 3b) of the plate (3) extend in the predetermined direction,
c) depositing at least one drop of reagent liquid (4) in contact with a wall (8) of the lateral surface (7) of the well (2),
d) drying the at least one drop of reagent (4) and obtaining reagent (4) deposited on the wall (8) of the lateral surface (7) of the well (2).

11. The method as claimed in the preceding claim, comprising a step e) of inserting the plate (3) between two films, and adhesion of the films to the plate (3).

12. The method as claimed in either of claims 10 and 11, wherein step c) of depositing the drop of reagent (4) comprises steps of:
c1) placing a needle with one end of the needle (11a) in the internal space (6) of a well (2),
c2) forming a drop at the end of the needle (11a), until contact is made with a wall (8) of the lateral surface (7),
c3) withdrawing the needle (11).

13. A method for quality control of a plate (3) manufactured according to any of the claims 10 to 12, and comprising steps of:
Q1) acquisition of an image of said plate (3),
Q2) verification of the absence of liquid between deposits of liquid reagent (4).

14. The quality control method as claimed in the preceding claim, comprising a step Q0) of acquisition of an image of said empty plate (3), and step Q2) comprises the comparison of pixels of the image acquired in step Q1) and of pixels of the image acquired in step Q0).

15. The quality control method as claimed in either of claims 13 and 14, wherein the image of the plate is a shadowgraphy image.

16. The quality control method as claimed in any one of claims 13 to 15, comprising a step a1) of recognition by an algorithm for detecting the wells (2) of the plate (3) and identification of regions of interest for each well (2) of the plate (3) for which the absence of liquid is verified.

17. The quality control method as claimed in claim 16, wherein each well (2) comprises a plurality of lobes (9) and a plurality of junctions (10) connecting the lobes (9), the lobes being intended to receive the deposits of liquid reagents (4), and the regions of interest include the junctions (10), the absence of liquid in said junctions (10) being verified.
